# EUROPEAN PATENT SPECIFICATION

(11) **EP 4 010 168 B1**
(45) Date of publication and mention of the grant of the patent: **06.05.2026**
(21) Application number: 20849354.4
(22) Date of filing: 07.08.2020
(51) Int. Cl.: B29C 59/02, B42D 25/30, B30B 9/28, B30B 15/02, B42D 25/425, B44B 5/00

(54) **RIBBON IMPRESSER/INDENTER FOR PLASTIC CARDS**
BANDEINDRÜCKER/-PRÄGER FÜR PLASTIKKARTEN
DISPOSITIF D'IMPRESSION/D'INDENTATION DE BANDE, DESTINÉ À DES CARTES EN PLASTIQUE

(30) Priority: 07.08.2019 US 201962883975 P
(43) Date of publication of application: 15.06.2022
(73) Proprietor: Entrust Corporation, Shakopee, MN 55379-3817 (US)
(72) Inventor: SVENSSON, Scott, Shakopee, Minnesota 55379-3817 (US); WICKSTROM, Dave, Shakopee, Minnesota 55379-3817 (US); GALLES, Donald, Shakopee, Minnesota 55379-3817 (US); MOORHOUSE, Jim, Shakopee, Minnesota 55379-3817 (US)
(74) Representative: Plasseraud IP
(86) International application number: PCT/IB2020/057490
(87) International publication number: WO 2021/024232

(56) References cited:
- CN-U- 209 096 233
- CN-U- 209 096 233
- US-A- 4 130 623
- US-A- 5 266 781
- US-A1- 2005 104 281
- US-A1- 2005 104 281
- US-A1- 2008 219 745
- US-A1- 2008 241 307
- US-A1- 2015 290 872
- US-A1- 2015 290 872
- US-A1- 2016 059 296

## Description

### Field

This disclosure relates to creating impressions (also referred to as an indent) in plastic card such as financial cards including credit and debit cards, identification cards, driver's licenses, gift cards, and other plastic cards.

### Background

Impressing/indenting on plastic cards, for example to create security features, is well known. One example of impressing plastic cards is described in U.S. Published Application No. 2015/0290872 where a heated die is used to create an impressed security feature on the plastic cards.

US 2015/290872 A1 discloses a heated indenter is provided for indenting a personalized document to create a security impression thereon

### Summary

The invention is defined in the appended claims.

An impresser mechanism is described that is configured to create impressions on plastic cards including, but not limited to, financial cards including credit and debit cards, identification cards, driver's licenses, gift cards, and other plastic cards. The impresser mechanism includes an anvil that is configured to resiliently support the plastic card while the impression is formed in the plastic card by a die. By resiliently supporting the plastic card while the impression is created, the resulting impression on the plastic card is substantially evened out.

The anvil can have any configuration that is suitable for resiliently supporting the plastic card while the impression is created. The anvil includes a non-metallic, resilient card support structure which supports the plastic card. The non-metallic, resilient card support structure is resiliently compliant and deforms during creation of the impression so that the resulting impression on the plastic card is substantially evened out. In another embodiment, the anvil can be resiliently mechanically mounted to allow the anvil to move or self-adjust during creation of the impression to help even out the resulting impression.

The impression that is created can be intended as a security impression and/or as a non-security impression. The impression can have any configuration including, but not limited to, a logo, a symbol, or one or more alphanumeric characters.

In one embodiment, a transferrable material from a ribbon can be added to the impression, for example as the impression is being formed. The transferrable material can be a colored material having any desired color including, but not limited to, gold, silver, copper, black colored material. In some embodiments, the transferrable material could actually be, or contain, a metal material such as gold, silver, copper or the like. The resilient support of the plastic card by the anvil helps to ensure that the transferrable material is more evenly applied to the impression.

In one embodiment, an impresser mechanism is described that is configured to create an impression on a plastic card. The impresser mechanism can include an impresser station disposed on a card travel path along which the plastic card can travel in the impresser mechanism. The impresser station can include a die, an anvil positioned opposite the die and on which the plastic card can be positioned to support the plastic card while the impression is formed on the plastic card using the die, and a ribbon that is positionable between the die and the plastic card. The anvil is configured to resiliently support the plastic card while the impression is formed on the plastic card using the die. The resilient support can be provided by a resilient card support structure that can be formed by a non-metallic material, or the anvil can be resiliently mechanically mounted to allow the anvil to move or self-adjust.

A plastic card processing system can include the impresser mechanism, along with a card input through which a plastic card is input, a card output through which the plastic card is output, a card transport mechanism that is configured to transport the plastic card from the card input to the card output, and a printing station configured to print on the plastic card.

In another embodiment, an impresser module is described that is configured to create an impression on a plastic card. The module includes an input through which the plastic card can be input into the impresser module, an output through which the plastic card can be output, a card travel path extending from the input and along which the plastic card can travel in the impresser module, and an impresser station disposed on the card travel path. The impresser station can include a die, an anvil positioned opposite the die and on which the plastic card can be positioned to support the plastic card while the impression is formed on the plastic card using the die, and a ribbon that is positionable between the die and the plastic card. The anvil is configured to resiliently support the plastic card while the impression is formed on the plastic card using the die.

In still another embodiment, a plastic card processing system includes the impresser module, and a housing having a front side, a rear side, a top and a bottom. A card input is provided at the front side, the rear side or the top of the housing, and a card input hopper that holds a plurality of plastic cards to be processed is in communication with the card input. A card travel path extends from the card input and along which a plastic card input from the card input hopper can travel. In addition, a print engine is disposed within the housing, where the print engine is configured to print on a plastic card input from the card input hopper. The impresser module can be mounted at the front side, rear side, or the top of the housing. In one example, the impresser module is mounted at the rear side of the housing.

### Drawings

Figure 1 schematically illustrates one embodiment of an impresser mechanism described herein.
Figure 2 is a detailed side view of the anvil of the impresser mechanism of Figure 1.
Figures 3A-3J illustrate different embodiments of resilient mechanical mounts for the anvil that can be used with the impresser mechanism.
Figure 4 is an isometric side view of an example of a die that can be used with the impresser mechanisms described herein.
Figure 5 is a cross-sectional view of a portion of the ribbon that can be used with the impresser mechanisms described herein.
Figure 6 is a view of a front side of a plastic card having an impression created by the die of Figure 4.
Figure 7 is a cross-sectional view along the line 7-7 in Figure 6.
Figure 8 is a schematic view of a plastic card processing system along with an impresser module described herein.
Figure 9 is a schematic view of another embodiment of a plastic card processing system along with the impresser module described herein.
Figure 10 is a schematic view of the impresser module described herein used as a stand-alone device.

### Detailed Description

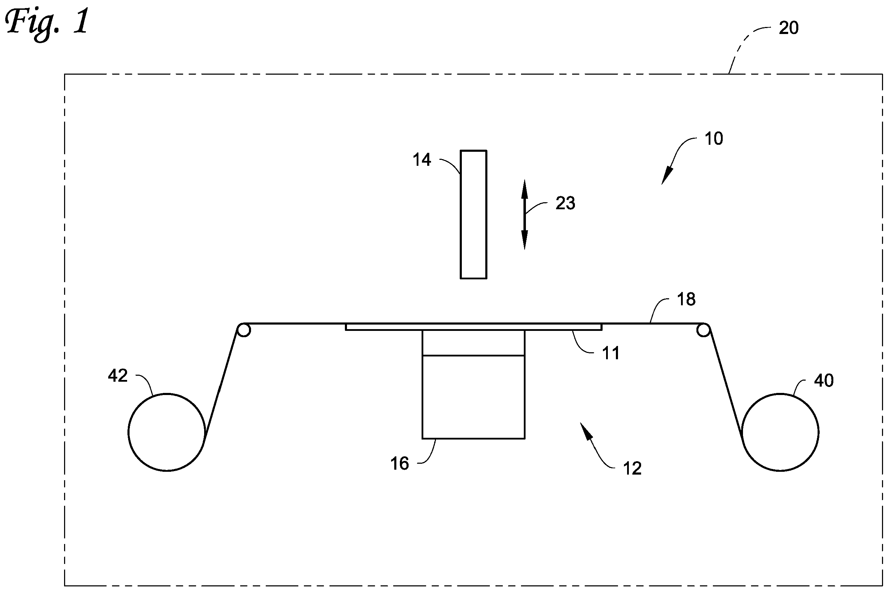

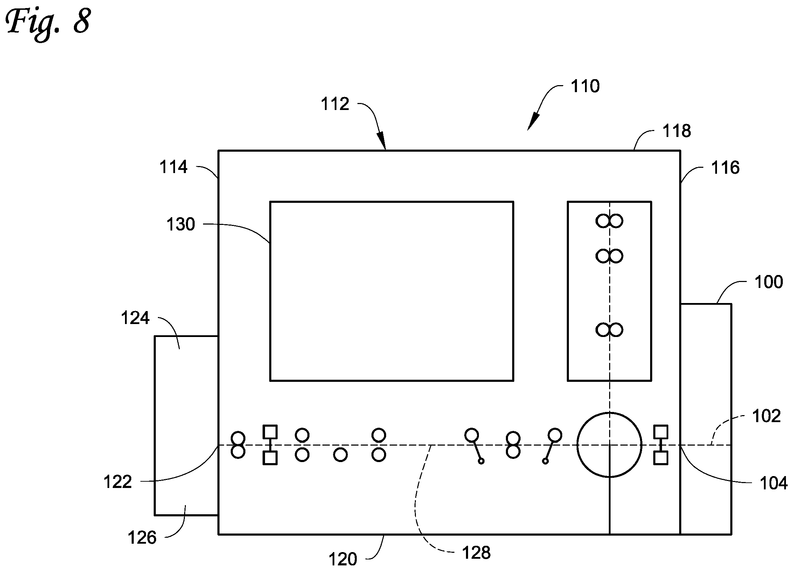

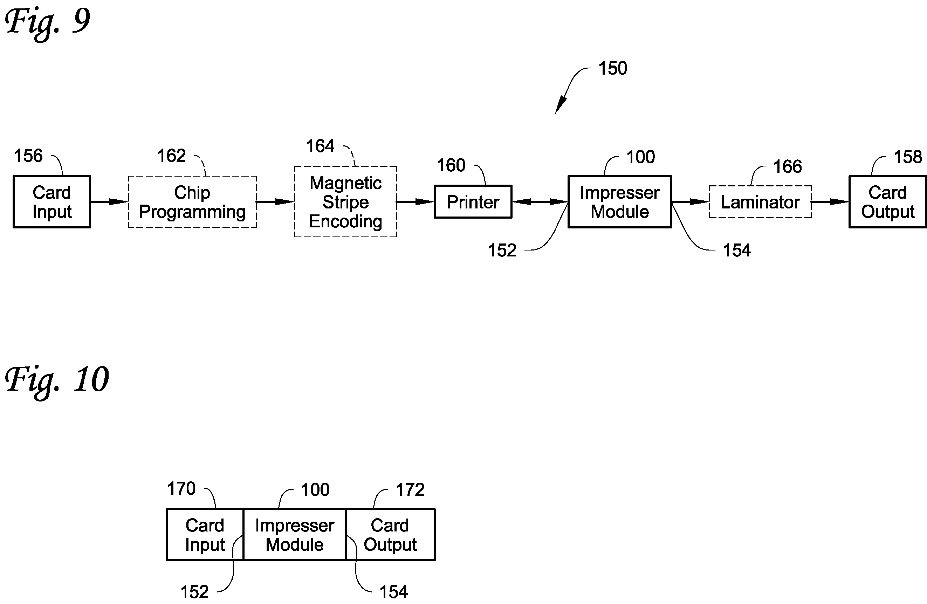

With reference to Figure 1, an impresser mechanism 10 is illustrated that is configured to create an impression (also referred to as an indent) in a plastic card 11 such as a financial card including a credit and debit card, an identification card, a driver's license, a gift card, and other plastic cards. The impresser mechanism 10 can be used as a stand-alone device or module (described further below with respect to Figure 10) or as a module in a plastic card processing system along with other plastic card processing devices (as described further below with respect to Figures 8 and 9).

The impresser mechanism 10 includes an impresser station 12 having a die 14, an anvil 16, and a ribbon 18. The components of the impresser station 12 may be disposed within a housing 20 (indicated in dashed lines) to form a self-contained device or module. Alternatively, the components of the impresser station 12 can be disposed within a housing of, and integrated into, another card processing device.

The impresser station 12, in particular the die 14 and the anvil 16, are configured to create an impression in the plastic card 11. An impression is a pattern of indentation formed in the plastic card from a first surface and extending toward the opposite, second surface. The indentation stops short of the opposite, second surface whereby the impression does not project from or beyond the opposite, second surface. In some embodiments, the indentation may extend through the entire thickness of the plastic card 11 from the first surface and past the second, opposite surface whereby the impression projects from the opposite, second surface in which case the portion of the impression that projects from the opposite, second surface may be considered an embossed feature on the opposite, second surface.

The impresser station 12 is disposed on a card travel path along which the plastic card 11 can travel in the impresser mechanism 10. The plastic card 11 can be moved along the card travel path by one or more suitable mechanical card transport mechanisms (not shown) of the impresser mechanism 10, and or by one or more suitable mechanical card transport mechanisms (not shown) of an upstream or downstream plastic card processing device. Mechanical card transport mechanism(s) for transporting plastic cards in plastic card processing equipment are well known in the art. Examples of card transport mechanisms that could be used are known in the art and include, but are not limited to, transport rollers, transport belts (with tabs and/or without tabs), vacuum transport mechanisms, transport carriages, and the like and combinations thereof. Card transport mechanisms are well known in the art including those disclosed in U.S. Patents 6902107, 5837991, 6131817, and 4995501 and U.S. Published Application No. 2007/0187870. A person of ordinary skill in the art would readily understand the type(s) of card transport mechanisms that could be used, as well as the construction and operation of such card transport mechanisms.

As shown in Figure 1, the die 14 and the anvil 16 are configured to create an impression in the card 11, for example in a surface of the card 11 that faces toward the die 14. The anvil 16 is positioned opposite the die 14 and the plastic card 11 is positioned on and supported by the anvil 16 while the impression is formed on the plastic card 11 using the die 14. During impressing, the plastic card 11 is fixed in position on the card travel path between the anvil 16 and the die 14. A suitable mechanism (not shown) known in the art can move the die 14 toward and away from the anvil 16 (as indicated by arrow 23) between a retracted position (Figure 1) and an impressing position (not shown). In another embodiment, the die 14 can be fixed in position and the anvil 16 can be actuated so as to be movable toward and away from the die 14. In still another embodiment, both the die 14 and the anvil 16 can be actuated toward and away from one another.

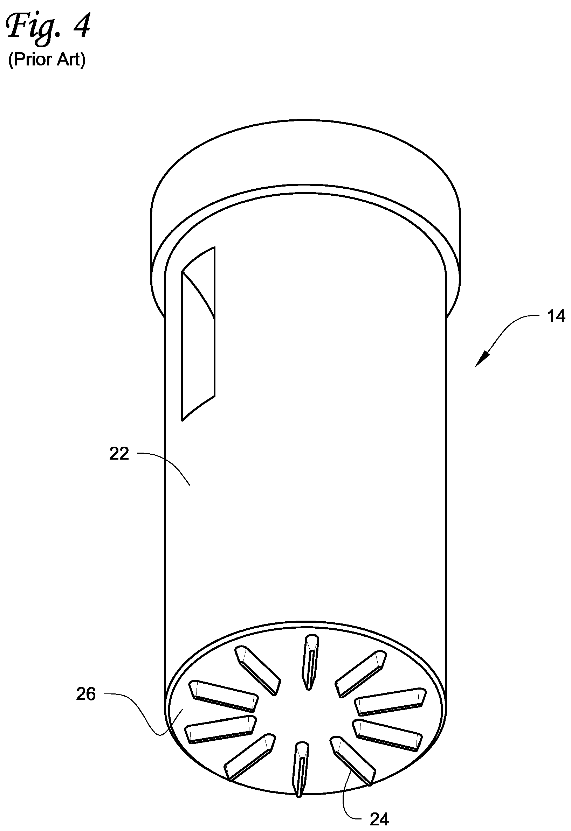

Figure 4 illustrates an example of the die 14 which in this example is identical to the die disclosed in U.S. Published Application No. 2015/0290872. The die 14 includes a die body 22 which can be cylindrical-shaped or have other suitable shapes such as rectangular or triangular. One or more impression features 24 project from an end surface 26 of the die body 22. The impression feature(s) 24 correspond in shape to the impression to be created on the plastic card 11. The impression feature(s) 24 can be formed to create an impression in the plastic card 11 having any shape or configuration. For example, the impression feature(s) 24 can form a logo, a symbol, or one or more alphanumeric characters. In addition, the impression feature(s) 24 can have any size and project any desired distance from the end surface 26 that is sufficient for creating the desired resulting impression in the plastic card 11. In some embodiments, the die 14, in particular the impression feature(s) 24, may be heated whereby a combination of pressure and heat of the impression feature(s) 24 generates the resulting impression in the plastic card 11. In other embodiments, the die 14 is not heated whereby pressure generates the resulting impression in the plastic card 11.

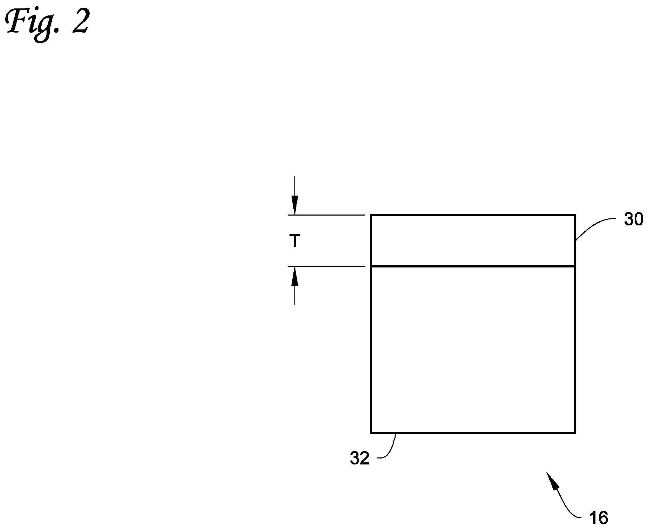

Referring to Figure 2, one embodiment of the anvil 16 is illustrated. In this embodiment, the anvil 16 can have any configuration as long as the anvil 16 includes a non-metallic, resilient card support structure 30 which supports and is in direct physical contact with the plastic card 11 while the impression is formed on the plastic card 11 using the die 14. In the illustrated example, the anvil 16 is shown as including a base 32 with the non-metallic, resilient card support structure 30 disposed on top of the base 32. The base 32 can be a substantially rigid structure formed from a suitable material such as metal or plastic. The non-metallic, resilient card support structure 30 is formed of a material that is resiliently compliant to allow localized, temporary deformation of the non-metallic, resilient card support structure 30 opposite the impression feature(s) 24 (see Figure 4) during formation of the impression in the plastic card 11. The compliant nature of the non-metallic, resilient card support structure 30 substantially evens out the resulting impression to achieve a more even and improved impression in the plastic card 11.

In the example illustrated in Figure 2, the non-metallic, resilient card support structure 30 is illustrated as being a layer of material on the base 32. However, in some embodiments the anvil 16 can be formed entirely by the non-metallic, resilient card support structure 30 without the base 32. In general, it is believed at this time that the thicker the non-metallic, resilient card support structure 30 is, the harder the structure 30 should be while still being resiliently compliant, while the thinner the non-metallic, resilient card support structure 30 is, the softer the structure 30 should be while still being resiliently compliant. The non-metallic, resilient card support structure 30 has a hardness of between about 20 Shore D to about 50 Shore D either for the entire structure 30 or just a portion of the structure 30 that is positioned opposite to the impression feature(s) 24 of the die 14. In another non-limiting embodiment, the non-metallic, resilient card support structure 30 can have a thickness T of about 3.175 mm together with a hardness of about 40 Shore D either for the entire structure 30 or just a portion of the structure 30 that is positioned opposite to the impression feature(s) 24 of the die 14. In another embodiment, the resilient card support structure 30 can have a thickness T of between about 3.175 mm to about 3.683 mm. As used herein, "between about" is intended to include the end points 3.175 and 3.683. In still another embodiment, the resilient card support structure 30 can have a thickness T of about 3.429 mm.

The non-metallic, resilient card support structure 30 is formed of any non-metallic material that provides the aforementioned desired properties. Examples of suitable materials include, but are not limited to, thermoplastic elastomer such as HYTREL^{®}, urethane rubber, and low density polyethylene.

Instead of using the non-metallic, resilient card support structure 30, the anvil 16 can instead be made substantially rigid, but with the anvil 16 being resiliently mechanically mounted to allow the anvil 16 to resiliently move or self-adjust during creation of the impression. In some embodiments, the non-metallic, resilient card support structure 30 and the resilient mechanical mounting can be used together. The resilient mechanical mounting of the anvil 16 can take any form sufficient to allow the anvil 16 to physically support the plastic card 11 and allow the anvil 16 to resiliently move or self-adjust as the die 14 creates the impression on the plastic card 11.

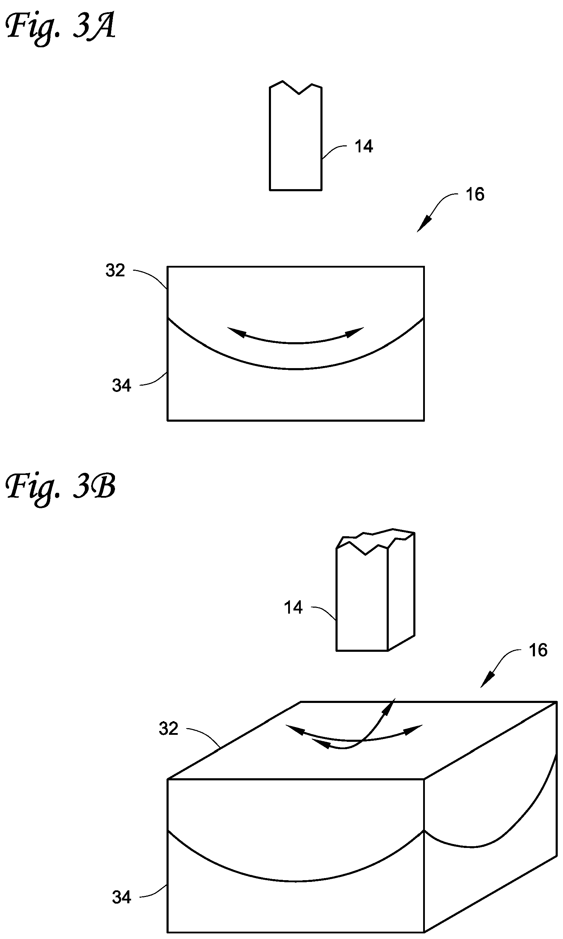

Non-limiting examples of resilient mechanical mounts are illustrated in Figures 3A-3J. Many additional examples of resilient mechanical mounts are possible.

In Figures 3A and 3B, the rigid base 32 of the anvil 16 is mounted on a slider mechanism 34, for example a hemispherical slider mechanism, that permits resilient sliding movements of the rigid base 32 in the directions of the arrows in multiple planes. In this example, the slider mechanism 34 has a concavity that receives a convex portion of the rigid base 32. This construction permits sliding movements of the rigid base 32 relative to the slider mechanism 34. As the die 14 contacts the plastic card 11 to form the impression, the rigid base 32 can self-adjust its position in the direction of the arrows to help even out the resulting impression on the plastic card 11. When the pressure from the die 14 is removed, the rigid base 32 is biased by a suitable biasing mechanism back to the home position shown in Figures 3A and 3B.

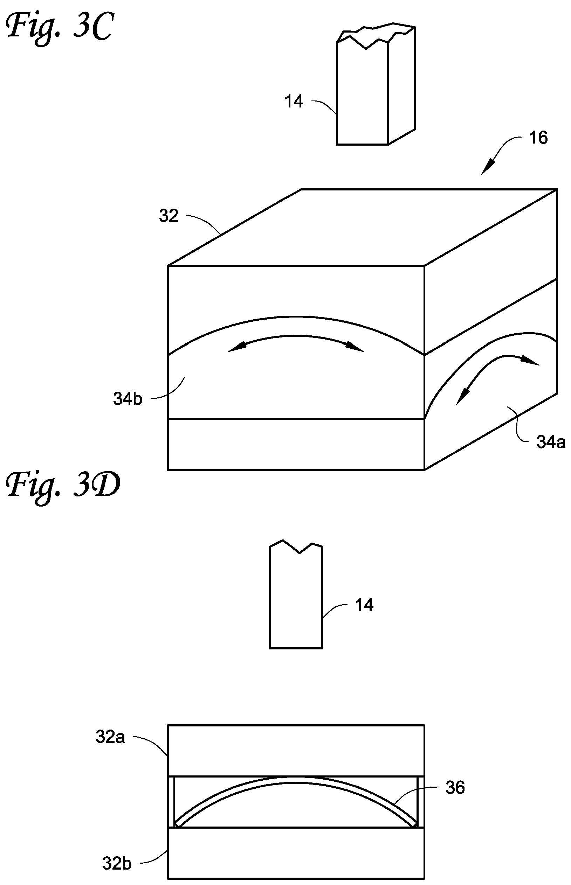

The embodiment in Figure 3C illustrates the rigid base 32 of the anvil 16 mounted on a hemispherical slider mechanism that has two cylindrical slider mechanisms 34a, 34b that permit resilient sliding movements of the rigid base 32 in the directions of the arrows in multiple planes. As the die 14 contacts the plastic card 11 to form the impression, the rigid base 32 can self-adjust its position in the directions of the arrows to help even out the resulting impression on the plastic card 11. When the pressure from the die 14 is removed, the rigid base 32 is biased by a suitable biasing mechanism back to the home position shown in Figure 3C.

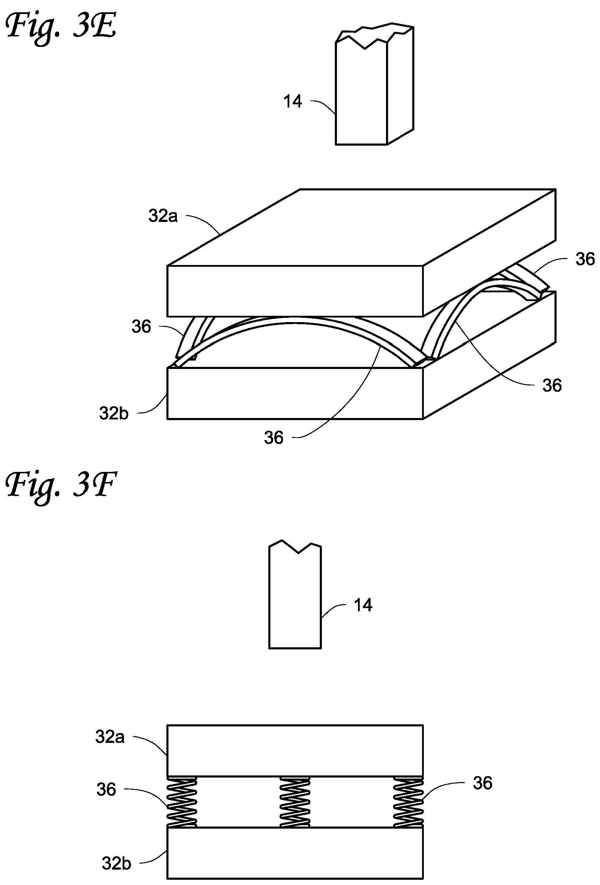

The embodiment in Figures 3D and 3E illustrates a plurality of springs 36, such as leaf springs, disposed between an upper portion 32a of the rigid base of the anvil 16 and a lower portion 32b of the rigid base along each side. As the die 14 contacts the plastic card 11 to form the impression, the upper portion 32a of the rigid base that supports the plastic card can self-adjust its position to help even out the resulting impression on the plastic card 11. When the pressure from the die 14 is removed, the upper portion 32a is biased back to the home position shown in Figures 3D and 3E by the springs 36.

The embodiment in Figure 3F is similar to the embodiment in Figures 3D and 3E but includes a plurality of springs 36 in the form of coil springs disposed between the upper portion 32a of the rigid base of the anvil 16 and the lower portion 32b of the rigid base.

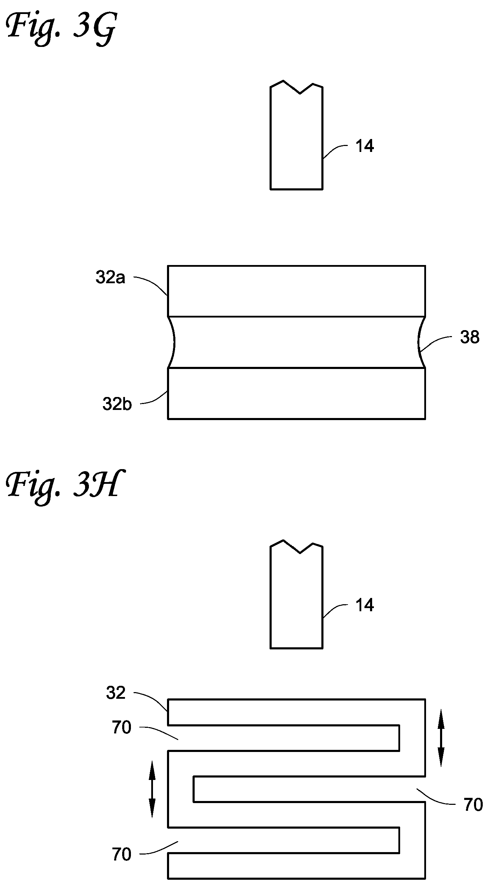

The embodiment in Figure 3G illustrates a resilient compliant layer 38, for example a layer of non-metallic material, disposed between the upper portion 32a of the rigid base of the anvil 16 and the lower portion 32b of the rigid base. As the die 14 contacts the plastic card 11 to form the impression, the upper portion 32a of the rigid base that supports the plastic card can self-adjust its position to help even out the resulting impression on the plastic card 11. When the pressure from the die 14 is removed, the upper portion 32a of the rigid base is biased back to the home position shown in Figure 3G.

The embodiment in Figure 3H illustrates one or more grooves 70 that are cut or otherwise formed in the rigid base 32 of the anvil 16 to allow the base 32 to self-adjust as the die 14 contacts the plastic card 11 to form the impression. However, the top surface of the base 32 on which the card 11 is supported is rigid. When the pressure from the die 14 is removed, the rigid base 32 is biased back to the home position shown in Figure 3H. The groove(s) 70 can be straight or linear to allow movements of the base 32 in one plane, or the groove(s) can be spiral cut to permit movements of the base 32 in multiple planes.

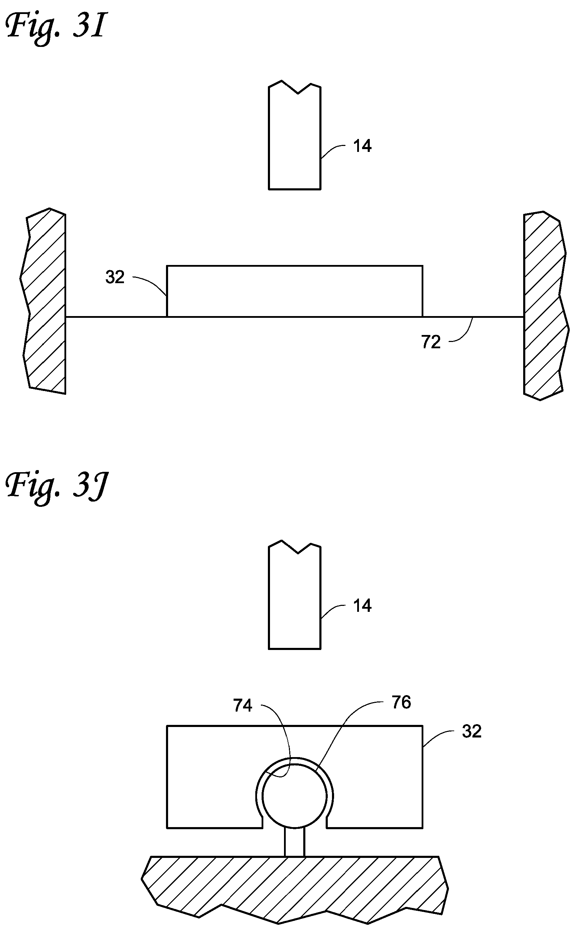

The embodiment in Figure 3I illustrates the rigid base 32 disposed on a flexible membrane 72 that permits movements of the rigid base 32 in multiple planes. As the die 14 contacts the plastic card 11 to form the impression, the rigid base 32 can self-adjust its position to help even out the resulting impression on the plastic card 11. When the pressure from the die 14 is removed, the rigid base 32 is biased back to the home position shown in Figure 3I.

The embodiment in Figure 3J illustrates the rigid base 32 formed with a socket 74 that receives a stationary ball 76. The ball and socket permit movements of the rigid base 32 in multiple planes. As the die 14 contacts the plastic card 11 to form the impression, the rigid base 32 can self-adjust its position via the socket and ball 74, 76 to help even out the resulting impression on the plastic card 11. When the pressure from the die 14 is removed, the rigid base 32 is biased by a suitable biasing mechanism back to the home position shown in Figure 3J.

Returning to Figure 1, in some embodiments the die 14 can be in direct, intimate engagement with the plastic card 11 to create the impression. In other embodiments, the ribbon 18 can be disposed between the plastic card 11 and the die 14 during creation of the impression. The ribbon 18 is designed to transfer a transferrable material therefrom to the resulting impression in the plastic card 11. As depicted in Figure 1, the ribbon 18 is supplied from a ribbon supply 40 with used ribbon being taken up by a ribbon take-up 42.

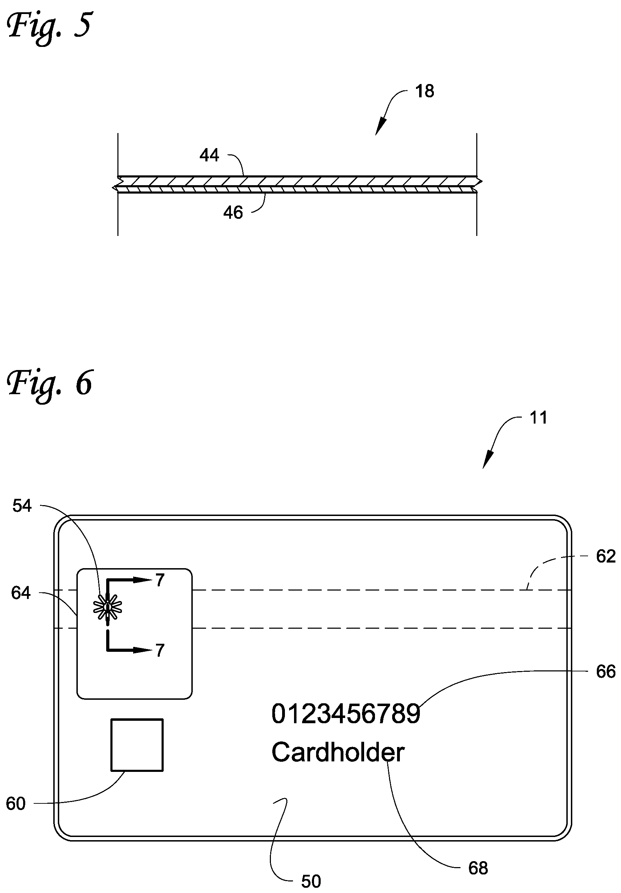

Figure 5 illustrates an example of a portion of the ribbon 18 that can be used. In this example, the ribbon 18 includes a carrier layer 44 that carries a transferrable material 46 that is designed to transfer from the carrier layer 44 to the resulting impression in the plastic card 11 upon application of pressure and/or heat from the impression feature(s) 24 of the die 14. The carrier layer 44 may be a non-metallic material or may be (or include) a metallic material. The transferrable material 46 can be a material that can be colored, including, but not limited to, black, gold, silver or copper colored. In some embodiments, the transferrable material may actually be a metal material, or include some metal material, such as gold, silver or copper. In embodiments where the transferrable material 46 has the color of a metal material, or includes a metal material, such as gold, silver or copper, the ribbon 18 may be referred to as a metallic foil. The material 46 of the ribbon 18 that transfers to the impression enhances the visual appearance of the impression or provides the impression with a desired visual appearance. At the same time, the resilient support of the plastic card 11 by the anvil 16 helps to ensure that the material 46 of the ribbon 18 is more evenly applied to the impression. After material is transferred from the ribbon 18 onto the plastic card 11, a new section of the ribbon 18 is brought into position by winding used ribbon onto the ribbon take-up 42 and an unused section of ribbon 18 being supplied from the ribbon supply 40.

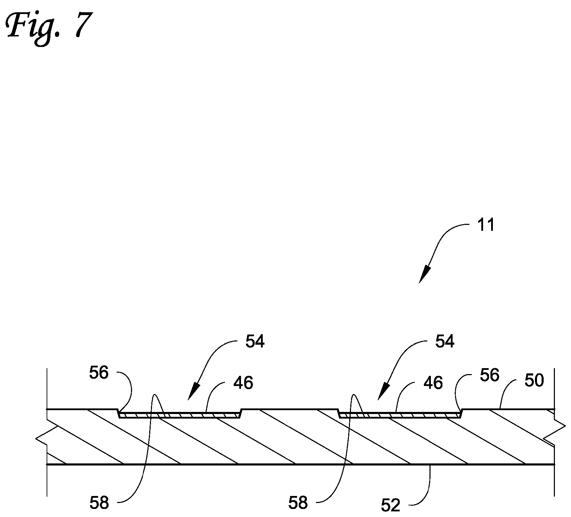

Referring to Figures 6 and 7, an example of the plastic card 11 is illustrated. The card includes a first surface 50 and a second, opposite surface 52. The first surface 50 can be the front or back surface of the plastic card 11. Similarly, the second, opposite surface 52 can be the front or back surface of the plastic card 11. In the illustrated example, an impression 54 is created in the first surface 50 by the impression feature(s) 24 of the die 14. The impression 54 comprises one or more indentations in the first surface 50 that extend downward toward and stopping short of the second, opposite surface 52. Each indentation(s) can have one or more side walls 56 and a bottom wall 58 that form the boundaries of the indentation(s).

As depicted in Figure 7, a layer of the transferrable material 46 is left behind in each indentation during creation of the impression 54. The layer of the transferrable material 46 preferably covers the entire bottom wall 58 and at least a portion of the side wall(s) 56 depending upon the thickness of the layer of the material 46. In the illustrated example, the layer of the material 46 has a constant thickness that is less than the depth of the indentation(s) of the impression 54. In other embodiments, the layer of the material 46 can have a thickness that is equal to the depth of the indentation(s) of the impression 54 such that a top of the material 46 is level with the first surface 50.

As best seen in Figure 6, the plastic card 11 can include other features and data thereon common to plastic cards of this type. For example, the plastic card 11 can include a programmable, contact or non-contact integrated circuit chip or smart chip 60 embedded in the plastic card 11. The plastic card 11 may also include a programmable magnetic stripe 62 located on one of the surfaces 50, 52, for example on the surface 52. The plastic card 11 may also include a portrait image 64 of the intended card holder printed on one of the surfaces 50, 52, for example on the surface 50. The plastic card 11 may also include other data such as an account number 66, the card holder's name 68 or the like formed on one of the surfaces 50, 52, for example on the surface 50, by any suitable means such as printing or embossing.

The impression 54 can be formed anywhere on any one of the surfaces 50, 52. The example illustrated in Figure 6 shows the impression 54 formed on the printed portrait image 64. However, the impression 54 can be formed at other locations. In addition, multiple impressions can be formed on the plastic card 11, including in both of the surfaces 50, 52.

The impresser mechanism 10 described herein can be used on large volume batch production card processing systems (or central issuance processing systems) as well as lower volume desktop card processing systems. For large volume batch processing of personalized plastic cards (for example, on the order of high hundreds or thousands per hour), institutions often utilize card processing systems that employ multiple processing stations or modules to process multiple cards at the same time to reduce the overall per card processing time. Examples of such machines include the MX and MPR family of central issuance processing machines available from Entrust Datacard Corporation of Shakopee, Minnesota. Other examples of central issuance processing machines are disclosed in U.S. Patents 4,825,054, 5,266,781, 6,783,067, and 6,902,107.

Desktop card processing systems are typically designed for relatively smaller scale, individual card personalization in relatively small volumes, for example measured in tens or low hundreds per hour. In these mechanisms, a single plastic card to be personalized is input into a card processing system, which typically includes one or two processing capabilities, such as printing and laminating. These processing machines are often termed desktop processing machines because they have a relatively small footprint intended to permit the processing machine to reside on a desktop. Many examples of desktop processing machines are known, such as the SD or CD family of desktop card printers available from Entrust Datacard Corporation of Shakopee, Minnesota. Other examples of desktop processing machines are disclosed in US Patents 7,434,728 and 7,398,972.

Figure 8 illustrates one example application of the impresser mechanisms described herein, where the impresser mechanism is configured as an impresser module 100 that is useable with a plastic card processing system 110 that is configured as a desktop card processing system. In this example, the impresser module 100 is a self-contained unit that includes the die 14 (Figure 1), the anvil 16 (Figure 1), and the ribbon 18 (Figure 1). The impresser module 100 may or may not include its own card transport capability depending upon whether a transport mechanism of the card processing system 110 can be used to transport the card along the card travel path 102 while the card is within the impresser module 100. The impresser module 100 includes an input/output 104 through which the plastic card from the card processing system 110 can be input to and output from the impresser module 100. The card travel path 102 extends from the input/output 104 and the plastic card can travel along the travel path 102 while in the impresser module 100. The impresser station 12 is disposed on the card travel path 102 to receive the card and create the impression on the card. The card can then be transported out through the input/output 104 back into the card processing system 110.

In this example, the impresser module 100 removably mounts externally to the rear side or back of the card processing system 110 to provide added card processing functionality, specifically creating the impression in the card, which is in addition to the card processing functionality of the card processing system 110. In other embodiments, the impresser module 100 can externally mount to the front side or the top of the card processing system 110. In still other embodiments, the impresser module 100 can mount internally to the card processing system 110.

Referring to Figure 8, the card processing system 110 includes a housing 112 having a front side 114, a rear side 116, a top 118 and a bottom 120. A main card input 122 is located at the front side 114 of the housing 112 through which plastic cards to be processed by the card processing system 110 are input. In some embodiments, the card input 122 can also form a card output through which processed cards can be output from the card processing system 110. In other embodiments, a card output that is separate from the card input 122, but also located at the front side 114 like the card input 122, can be provided through which processed cards can be output from the system 110. A card input hopper 124 can be mounted at the front side 114 that is in communication with the card input 122. The card input hopper 124 is designed to hold a number of plastic cards waiting to be processed which are fed one-by-one into the housing 112 by a suitable card feed mechanism known in the art. In embodiments where a card output is also located at the front side 114, a card output hopper 126 can also be mounted at the front side 114 that is in communication with the card output for receiving finished processed cards. The card output hopper 126 is designed to hold a number of finished processed cards after they have been processed which are fed out of the housing through a suitable card outlet, which can coincide with or be separate from the card input 122, and dropped into the card output hopper 126 in a manner known in the art. The card processing system 110 can also include a card travel path 128 extending from the card input 122 and along which a plastic card input from the card input hopper can travel. A print engine (or printing station) 130 is disposed within the housing 112 along the card travel path 128. The print engine 130 is configured to print on a plastic card input from the card input hopper using any suitable printing technique including, but not limited to, retransfer printing, drop-on-demand printing, thermal transfer printing, and other known card printing techniques. A suitable transport mechanism(s) known in the art for transporting plastic cards is provided for transporting the plastic card(s) within the card processing system 110. Further details on the card processing system 110 are disclosed in U.S. Patent 9904876.

Figure 9 illustrates another example application of the impresser module 100 that is used in a plastic card processing system 150 that is configured as a large volume batch production card processing system (or central issuance card processing system). In this example, the impresser module 100 is a self-contained unit that includes the die 14 (Figure 1), the anvil 16 (Figure 1), and the ribbon 18 (Figure 1). The impresser module 100 can include its own card transport capability for transporting the plastic cards along the card travel path while the card is within the impresser module 100. The impresser module 100 includes an input 152 at one end through which the plastic card can be input into the impresser module 100, and an output 154 at the opposite end through which the plastic card can be output from the impresser module 100. The card travel path extends from the input 152 to the output 154 and the plastic card can travel along the travel path while in the impresser module 100. The impresser station described above is disposed on the card travel path to receive the card and create the impression on the card. The card can then be transported out through the output 154.

The card processing system 150 typically includes at least a card input 156, for example in the form of a card input module or hopper, that inputs plastic cards, and a card output 158, for example in the form of a card output module or hopper, into which processed cards are output. The card processing system 150 also includes a printing station or module 160 that is configured to print on the plastic cards using any suitable printing technique including, but not limited to, retransfer printing, drop-on-demand printing, thermal transfer printing, and other known card printing techniques. The card processing system 150 may also include other card processing modules or stations located between the card input 156 and the card output 158 that perform additional processing operations on plastic cards in the card processing system 150. Examples of other card processing modules/stations can include, but are not limited to, a chip programming module/station 162 that reads data from and/or programs data onto the integrated circuit chips 60 (see Figure 6) on the plastic cards, a magnetic stripe encoding module/station 164 that reads data from and/or encodes on the magnetic stripes 62 on the plastic cards, a lamination module/station 166 that applies a laminate or coating to one or more surfaces of the plastic cards, and other plastic card processing modules/stations known in the art. Each module/station will have a suitable card transport mechanism(s) known in the art configured to transport the plastic cards from the card input 156 to the card output 158. Additional information on the construction and operation of card inputs, card outputs, and card processing modules/stations can be found in U.S. Patents 4,825,054, 5,266,781, 6,783,067, and 6,902,107.

Figure 10 illustrates another example application of the impresser module 100 that is used as a stand-alone mechanism without any additional card processing elements. In this example, the impresser module 100 is a self-contained unit that includes the die 14 (Figure 1), the anvil 16 (Figure 1), and the ribbon 18 (Figure 1). The impresser module 100 includes its own card transport capability for transporting the plastic cards along the card travel path while the card is within the impresser module 100. The impresser module 100 includes the card input 152, and the card output 154 at the opposite end through which the plastic card can be output from the impresser module 100. The card travel path extends from the input 152 to the output 154 and the plastic card can travel along the travel path while in the impresser module 100. The impresser station described above is disposed on the card travel path to receive the card and create the impression on the card. The card can then be transported out through the output 154. A card input 170, for example in the form of a card input module or hopper, can input plastic cards, and a card output 172, for example in the form of a card output module or hopper, can receive cards impressed by the impresser module 100.

The examples disclosed in this application are to be considered in all respects as illustrative and not limitative. The scope of the invention is indicated by the appended claims rather than by the foregoing description; and all changes which come within the meaning and range of the claims are intended to be embraced therein.

## Claims

1. An impresser mechanism (10) configured to create an impression (54) on a plastic card (11), comprising:
an impresser station (12) disposed on a card travel path along which the plastic card can travel in the impresser mechanism; the impresser station includes a die (14), an anvil (16) positioned opposite the die and on which the plastic card can be positioned to support the plastic card while the impression is formed on the plastic card using the die, wherein the impression is a pattern of indentation formed in the plastic card from a first surface (50) and extending toward the opposite, second surface (52) and stopping short of the opposite, second surface;
the anvil includes a non-metallic, resilient card support structure (30) made of a non-metallic material which supports and is in direct physical contact with the plastic card while the impression is formed on the plastic card using the die; **characterized in that**
the non-metallic material has a hardness of between about 20 Shore D to about 50 Shore D.

2. The impresser mechanism (10) of claim 1, wherein the non-metallic material has a thickness of between about 3.175 mm to about 3.683 mm and a hardness of about 40 Shore D.

3. The impresser mechanism (10) of claim 1, wherein the non-metallic material has a thickness of about 3.429 mm.

4. The impresser mechanism (10) of claim 1, further comprising a ribbon (18) that is positionable between the die and the plastic card.

5. A plastic card processing system (110, 150), comprising:
a card input (122, 156) through which a plastic card is input;
a card output (104, 126, 158) through which the plastic card is output;
a card transport mechanism configured to transport the plastic card from the card input to the card output;
a printing station (130, 160) configured to print on the plastic card; and
the impresser mechanism (10) of any one of claims 1 to 4.

6. The plastic card processing system (110, 150) of claim 5, wherein the impresser mechanism (10) is internal to the plastic card processing system or external to the plastic card processing system.

7. An impresser module (100) configured to create an impression (54) on a plastic card (11), comprising:
an input (104, 122) through which the plastic card can be input into the impresser module;
an output (104, 122) through which the plastic card can be output from the impresser module;
a card travel path (128) extending from the input and along which the plastic card can travel in the impresser module;
the impresser mechanism (10) of any one of claims 1 to 4 disposed on the card travel path.

8. A plastic card processing system (110), comprising:
a housing (112) having a front side (114), a rear side (116), a top (118) and a bottom (120);
a card input (122) at the front side, the rear side or the top of the housing;
a card input hopper (124) that is in communication with the card input, the card input hopper is configured to hold a plurality of plastic cards to be processed;
a card travel path (128) extending from the card input and along which a plastic card input from the card input hopper can travel;
a print engine (130) within the housing, the print engine is configured to print on a plastic card input from the card input hopper:
the impresser module (100) of claim 7 mounted at the front side, the rear side, or the top of the housing.

9. The plastic card processing system (110) of claim 8, wherein the card input (122) is at the front side (114) of the housing (112) and the card input hopper (124) is mounted at the front side (114) of the housing; and
the impresser module (100) is mounted at the rear side (116) of the housing.

## Patentansprüche

1. Prägemechanismus (10), welcher dazu eingerichtet ist, eine Prägung (54) an einer Kunststoff-Karte (11) zu erzeugen, umfassend:
eine Prägestation (12), welche an einem Karten-Fortbewegungspfad angeordnet ist, entlang welchem sich die Kunststoff-Karte in dem Prägemechanismus fortbewegen kann; wobei die Prägestation einen Stempel (14) und einen Amboss (16) umfasst, welcher gegenüber dem Stempel positioniert ist und an welchem die Kunststoff-Karte positioniert werden kann, um die Kunststoff-Karte zu tragen, während die Prägung an der Kunststoff-Karte unter Verwendung des Stempels gebildet wird, wobei die Prägung ein Vertiefungsmuster ist, welches in der Kunststoff-Karte von einer ersten Fläche (50) gebildet ist und sich in Richtung der gegenüberliegenden zweiten Fläche (52) erstreckt und vor der gegenüberliegenden zweiten Fläche endet;
wobei der Amboss eine nicht-metallische nachgiebige Karten-Tragestruktur (30) aufweist, welche aus einem nicht-metallischen Material hergestellt ist, welche die Kunststoff-Karte trägt und in direktem physischem Kontakt mit ihr ist, während die Prägung an der Kunststoff-Karte unter Verwendung des Stempels gebildet wird; **dadurch gekennzeichnet, dass**
das nicht-metallische Material eine Härte von zwischen etwa 20 Shore-D bis etwa 50 Shore-D aufweist.

2. Prägemechanismus (10) nach Anspruch 1, wobei das nicht-metallische Material eine Dicke von zwischen etwa 3,175 mm bis etwa 3,683 mm und eine Härte von etwa 40 Shore-D aufweist.

3. Prägemechanismus (10) nach Anspruch 1, wobei das nicht-metallische Material eine Dicke von etwa 3,429 mm aufweist.

4. Prägemechanismus (10) nach Anspruch 1, ferner umfassend ein Band (18), welches zwischen dem Stempel und der Kunststoff-Karte positionierbar ist.

5. Kunststoff-Karten-Bearbeitungssystem (110, 150), umfassend:
eine Karteneingabe (122, 156), durch welche eine Kunststoff-Karte eingegeben wird;
eine Kartenausgabe (104, 126, 158), durch welche die Kunststoff-Karte ausgegeben wird;
einen Karten-Transportmechanismus, welcher dazu eingerichtet ist, die Kunststoff-Karte von der Karteneingabe zu der Kartenausgabe zu transportieren;
eine Druckstation (130, 160), welche dazu eingerichtet ist, auf die Kunststoff-Karte zu drucken; und
den Prägemechanismus (10) nach einem der Ansprüche 1 bis 4.

6. Kunststoff-Karten-Bearbeitungssystem (110, 150) nach Anspruch 5, wobei der Prägemechanismus (10) intern zu dem Kunststoff-Karten-Bearbeitungssystem oder extern zu dem Kunststoff-Karten-Bearbeitungssystem ist.

7. Prägemodul (100), welches dazu eingerichtet ist, eine Prägung (54) an einer Kunststoff-Karte (11) zu erzeugen, umfassend:
eine Eingabe (104, 122), durch welche die Kunststoff-Karte in das Prägemodul eingegeben werden kann;
eine Ausgabe (104, 122), durch welche die Kunststoff-Karte aus dem Prägemodul ausgegeben werden kann;
einen Karten-Fortbewegungspfad (128), welcher sich von der Eingabe erstreckt und entlang welchem sich die Kunststoff-Karte in dem Prägemodul fortbewegen kann;
den Prägemechanismus (10) nach einem der Ansprüche 1 bis 4, welcher an dem Karten-Fortbewegungspfad angeordnet ist.

8. Kunststoff-Karten-Bearbeitungssystem (110), umfassend:
ein Gehäuse (112), welches eine vordere Seite (114), eine hintere Seite (116), eine Oberseite (118) und eine Unterseite (120) aufweist;
eine Karteneingabe (122) an der vorderen Seite, der hinteren Seite oder der Oberseite des Gehäuses;
einen Karteneingabe-Zwischenbehälter (124), welcher in Kommunikation mit der Karteneingabe ist, wobei der Karteneingabe-Zwischenbehälter dazu eingerichtet ist, eine Mehrzahl von zu bearbeitenden Kunststoff-Karten zu halten;
einen Karten-Fortbewegungspfad (128), welcher sich von der Karteneingabe erstreckt und entlang welchem sich eine Kunststoff-Karte, welche von dem Karteneingabe-Zwischenbehälter eingegeben wird, fortbewegen kann;
ein Druckwerk (130) innerhalb des Gehäuses, wobei das Druckwerk dazu eingerichtet ist, auf eine Kunststoff-Karte zu drucken, welche von dem Karteneingabe-Zwischenbehälter eingegeben wird;
das Prägemodul (100) nach Anspruch 7 an der vorderen Seite, der hinteren Seite oder der Oberseite des Gehäuses montiert.

9. Kunststoff-Karten-Bearbeitungssystem (110) nach Anspruch 8, wobei sich die Karteneingabe (122) an der vorderen Seite (114) des Gehäuses (112) befindet und der Karteneingabe-Zwischenbehälter (124) an der vorderen Seite (114) des Gehäuses montiert ist; und
das Prägemodul (100) an der hinteren Seite (116) des Gehäuses montiert ist.

## Revendications

1. Mécanisme de formation d'empreinte (10) configuré pour créer une empreinte (54) sur une carte en plastique (11), comprenant :
un poste de formation d'empreinte (12) disposé sur un trajet de déplacement de carte, le long duquel la carte en plastique peut se déplacer dans le mécanisme de formation d'empreinte ; le poste de formation d'empreinte comprenant une matrice (14), une enclume (16) positionnée à l'opposé de la matrice et sur laquelle la carte en plastique peut être positionnée pour soutenir la carte en plastique pendant que l'empreinte est formée sur la carte en plastique au moyen de la matrice, l'empreinte étant un motif d'indentation formé dans la carte en plastique à partir d'une première surface (50) et s'étendant vers la seconde surface (52) opposée et s'arrêtant en deçà de la seconde surface opposée ;
l'enclume comprenant une structure de soutien de carte non métallique et résiliente (30) constitué d'un matériau non métallique qui soutient la carte plastique et qui est en contact physique direct avec celle-ci pendant que l'empreinte est formée sur la carte en plastique au moyen de la matrice ;
**caractérisé en ce que** :
le matériau non métallique a une dureté comprise entre environ 20 Shore D et environ 50 Shore D.

2. Mécanisme de formation d'empreinte (10) selon la revendication 1, le matériau non métallique ayant une épaisseur comprise entre environ 3,175 mm et environ 3,683 mm et une dureté d'environ 40 Shore D.

3. Mécanisme de formation d'empreinte (10) selon la revendication 1, le matériau non métallique ayant une épaisseur d'environ 3,429 mm.

4. Mécanisme de formation d'empreinte (10) selon la revendication 1, comprenant en outre un ruban (18) qui est positionnable entre la matrice et la carte en plastique.

5. Système de traitement de carte en plastique (110, 150), comprenant :
une entrée de carte (122, 156) par laquelle une carte en plastique est entrée ;
une sortie de carte (104, 126, 158) par laquelle la carte en plastique est sortie ;
un mécanisme de transport de carte configuré pour transporter la carte en plastique de l'entrée de carte à la sortie de carte ;
une station d'impression (130, 160) configurée pour imprimer sur la carte en plastique ; et
le mécanisme de formation d'empreinte (10) selon l'une quelconque des revendications 1 à 4.

6. Système de traitement de carte en plastique (110, 150) selon la revendication 5, le mécanisme de formation d'empreinte (10) étant interne au système de traitement de carte en plastique ou externe au système de traitement de carte en plastique.

7. Module de formation d'empreinte (100) configuré pour créer une empreinte (54) sur une carte en plastique (11), comprenant :
une entrée (104, 122) par laquelle la carte en plastique peut être entrée dans le module de formation d'empreinte ;
une sortie (104, 122) par laquelle la carte en plastique peut être sortie du module de formation d'empreinte ;
un trajet de déplacement de carte (128) s'étendant à partir de l'entrée et le long duquel la carte en plastique peut se déplacer dans le mécanisme de formation d'empreinte ;
le mécanisme de formation d'empreinte (10) selon l'une quelconque des revendications 1 à 4, disposé sur le trajet de déplacement de carte.

8. Système de traitement de carte en plastique (110), comprenant :
un boîtier (112) ayant un côté avant (114), un côté arrière (116), un dessus (118) et un dessous (120) ;
une entrée de carte (122) au niveau du côté avant, du côté arrière ou du dessus du boîtier ;
une trémie d'entrée de carte (124) qui est en communication avec l'entrée de carte, la trémie d'entrée de carte étant configurée pour contenir une pluralité de cartes en plastique à traiter ;
un trajet de déplacement de carte (128) s'étendant à partir de l'entrée de carte et le long duquel une carte en plastique, entrée à partir de la trémie d'entrée de carte, peut se déplacer ;
un moteur d'impression (130) à l'intérieur du boîtier, le moteur d'impression étant configuré pour imprimer sur une carte en plastique provenant de la trémie d'entrée de carte ;
le module de formation d'empreinte (100) selon la revendication 7 au niveau du côté avant, du côté arrière ou du dessus du boîtier.

9. Système de traitement de carte en plastique (110) selon la revendication 8, l'entrée de carte (122) étant au niveau du côté avant (114) du boîtier (112) et la trémie d'entrée de carte (124) étant montée au niveau du côté avant (114) du boîtier ; et
le module de formation d'empreinte (100) étant monté au niveau du côté arrière (116) du boîtier.
